# FASCICULE DE BREVET EUROPEEN

(11) **EP 0 853 363 B1**
(45) Date de publication et mention de la délivrance du brevet: **26.01.2005**
(21) Numéro de dépôt: 97810968.4
(22) Date de dépôt: 10.12.1997
(51) Int. Cl.: H02H 3/087

(54) **Sectionneur statique**
Statischer Schalter
Static switch

(30) Priorité: 08.01.1997 FR 9700101
(43) Date de publication de la demande: 15.07.1998
(73) Titulaire: SOMFY SAS, 74300 Cluses (FR)
(72) Inventeur: Tranchand, Alain, 74330 LA Balme De Sillingy (FR)
(74) Mandataire: Meylan, Robert Maurice

(56) Documents cités:
- FR-A- 2 400 787
- US-A- 3 851 218
- US-A- 4 203 141

## Description

La présente invention concerne un sectionneur statique de circuit d'alimentation en courant continu d'une charge en cas de surintensité, constitué d'un dipôle destiné à être inséré dans le circuit de puissance de la charge, ce dipôle étant constitué de composants discrets et comprenant des moyens de détection de surintensité non passagère, des moyens de filtrage et de mémorisation de la tension d'alimentation destinés à supprimer l'effet d'une surintensité passagère lors de la mise sous tension de la charge et à conserver en mémoire la présence de la tension d'alimentation et des moyens de coupure de l'alimentation de la charge commandés par les moyens de détection d'une surintensité.

Un tel sectionneur est connu du brevet US 3,851,218. Il a pour avantage sur les sectionneurs constitués d'un quadripôle de pouvoir se substituer à un fusible classique. Dans ce sectionneur statique les moyens de filtrage et de mémorisation de la tension d'alimentation destinés à supprimer l'effet d'une surintensité passagère lors de la mise sous tension de la charge, en particulier lors du démarrage d'un moteur, sont constitués de manière classique d'un condensateur en série avec une résistance. Rien n'est prévu toutefois pour décharger rapidement le condensateur lors de l'interruption de l'alimentation du moteur et du sectionneur, de telle sorte que le temps de recouvrement du sectionneur statique est relativement long, le condensateur devant se décharger au travers d'une résistance dont la valeur est importante.

Afin de pallier cet inconvénient, le sectionneur statique selon l'invention est caractérisé en ce que les composants du dipôle selon l'invention constituent en outre des moyens de détection de la disparition de la tension d'alimentation et des moyens d'effacement des moyens de mémorisation.

Les moyens de mémorisation de la tension d'alimentation étant en général constitués essentiellement par un condensateur, les moyens d'effacement constituent des moyens de purge de la charge électrique du condensateur.

Selon un mode d'exécution préféré de l'invention, plusieurs composants interviennent en outre dans plus d'une fonction, ce qui permet de réduire le nombre de composants du circuit.

Ce mode d'exécution sera exposé plus en détail en référence au dessin annexé dans lequel :
la figure 1 représente le schéma du sectionneur statique;
la figure 2 représente, sous forme de schéma bloc, les différentes fonctions remplies par le circuit de la figure 1;
la figure 3 montre, en trait gras, les composants du circuit intervenant dans la fonction de détection d'une surintensité;
la figure 4, montre en trait gras, les composants du circuit intervenant dans la fonction filtrage et mémorisation de la tension d'alimentation;
la figure 5 montre, en trait gras, les composants du circuit intervenant dans la fonction coupure de l'alimentation de la charge ou fonction interrupteur;
la figure 6 montre, en trait gras, les composants du circuit intervenant dans la fonction détection de la disparition de la tension d'alimentation et;
la figure 7 montre, en trait gras, les composants du circuit intervenant dans la fonction effacement de la mémoire ou purge de la charge électrique.

Le circuit représenté comprend, en parallèle entre les bornes du dipôle, une résistance R3, un condensateur C en série avec une résistance R1, un circuit intégré CI en série avec une diode D et une résistance R6, un transistor T1 de type PNP en série avec une résistance R7, un transistor T4 de type NPN en série avec deux résistances R8 et R9 et un transistor T3 de type PNP en série avec une résistance R2. En parallèle au condensateur C est branchée une diode de Zener Z polarisée en tension inverse. Le circuit comprend en outre un quatrième transistor T6 de type NPN dont la base est reliée au point commun de la diode D et de la résistance R6, l'émetteur est relié au point commun du condensateur C et de la résistance R1 et le collecteur est relié au point commun des résistances R8 et R9, ce point commun étant en outre relié à la base du transistor T3, et une résistance R4 à travers laquelle la base du transistor T1 reliée à la sortie S du circuit CI. La base du transistor T4 est reliée au collecteur du transistor T1.

La diode Zener a pour rôle de limiter la tension aux bornes du condensateur C.

Le circuit CI est un circuit à valeur de seuil. Si une tension supérieure à son seuil interne se présente entre ses bornes E (entrée) et M (masse) sa sortie S passe d'une tension nulle à une tension positive.

La diode D empêche une destruction de la jonction base-émetteur du transistor T6.

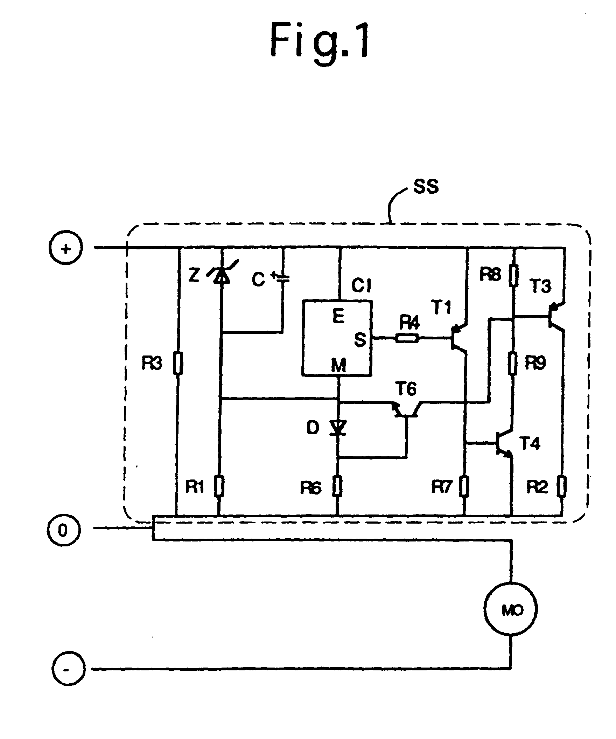

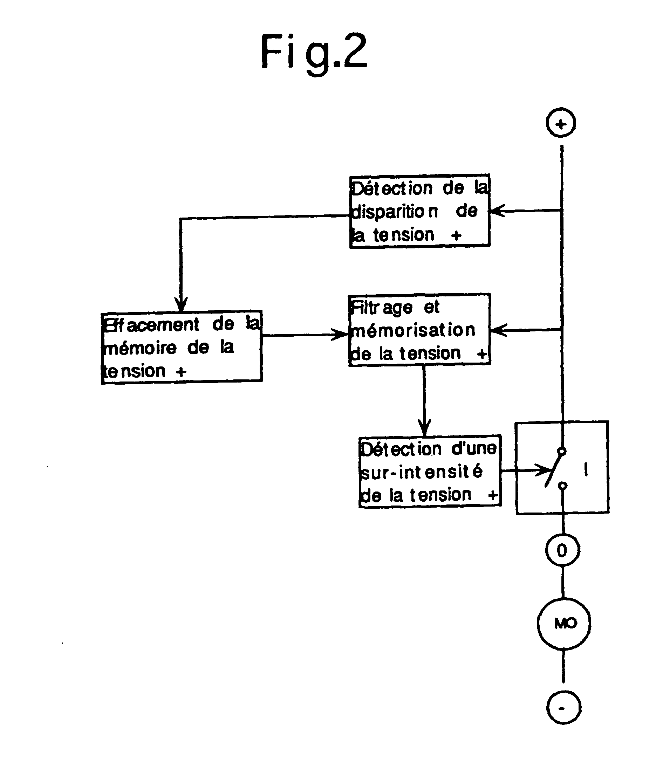

Le circuit représenté à la figure 1 assure les fonctions représentées par des rectangles à la figure 2. Ces fonctions sont :
- filtrage et mémorisation de la tension + (tension d'alimentation),
- détection d'une surintensité,
- détection de la disparition de la tension +,
- effacement de la mémoire de la tension + (purge de la charge),
- interrupteur, indiqué par I.

Plusieurs des composants du circuit participent à plusieurs fonctions. Ainsi, R1, C et T3 participent à trois fonctions et R2, R6 et T6 participent à deux fonctions.

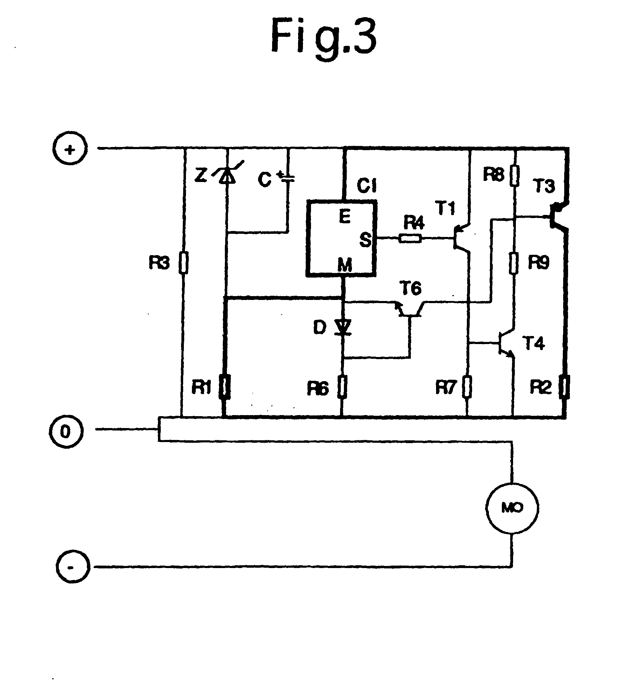

La fonction détection d'une surintensité est représentée à la figure 3. Le courant moteur passe au travers de R2 en y créant une différence de potentiel que l'on retrouve sur les bornes de détection du circuit CI. L'apparition d'une tension à la sortie S de CI signifie que l'on a une chute de tension trop importante dans R2, c'est-à-dire une surintensité.

Relevons que lors de cette interruption, la tension aux bornes du condensateur C augmente jusqu'à la valeur de la tension Zener de la diode Z, ce qui a tendance à confirmer la détection de la présence de cette tension.

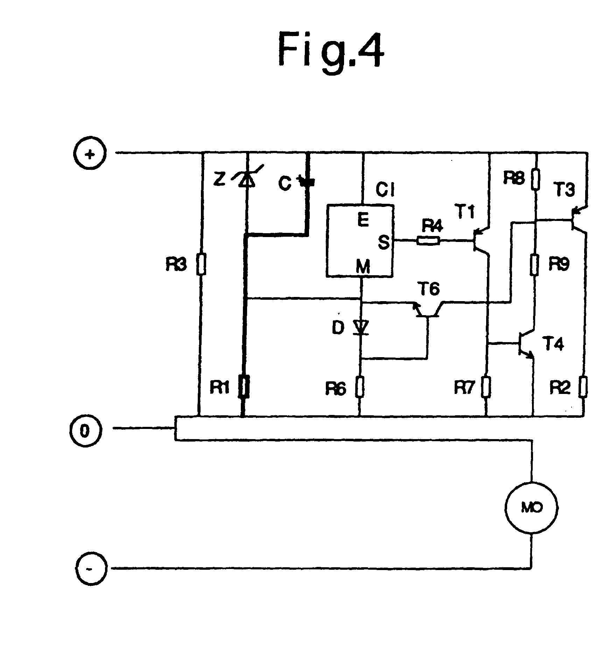

La fonction filtrage et mémorisation de la tension est représentée à la figure 4.

Lors de la mise sous tension du dispositif, le courant de démarrage du moteur ne doit pas être perçu comme une surintensité à interrompre. Cette fonction est assurée par le condensateur C qui se charge suffisamment lentement à travers R1 pour que le circuit CI ne détecte pas une tension supérieure à son seuil de déclenchement.

Une fois chargé, le condensateur C conserve la mémoire de la présence de la tension d'alimentation (+).

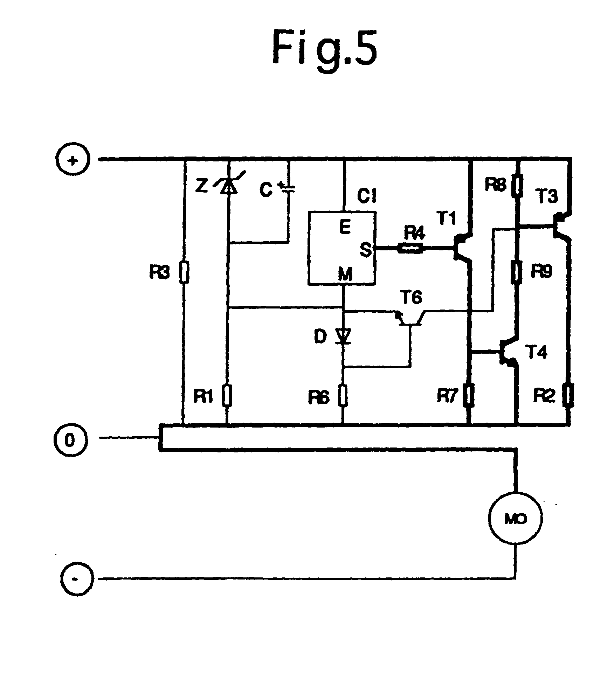

La fonction interrupteur est représentée à la figure 5. Lorsqu'une tension apparaît à la sortie S du circuit CI, elle provoque le blocage des transistors T1 et T4 et du transistor de puissance T3. Le courant moteur tombe pratiquement à zéro. Seul subsiste un courant résiduel à travers la résistance R3.

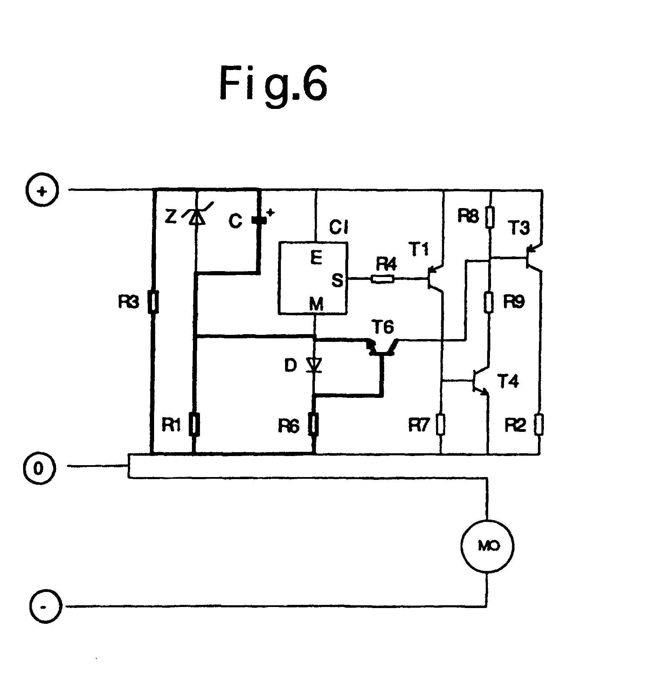

La fonction de détection de la disparition de la tension d'alimentation (+) est représentée à la figure 6.

Lorsque l'alimentation est interrompue, en particulier en raison d'un ordre d'arrêt du moteur et que la tension + du dispositif disparaît, le condensateur C se décharge à travers les résistances R1, R3 et R6 et la jonction base-émetteur du transistor T6. C'est la conduction de ce transistor qui caractérise la détection de la disparition de la tension.

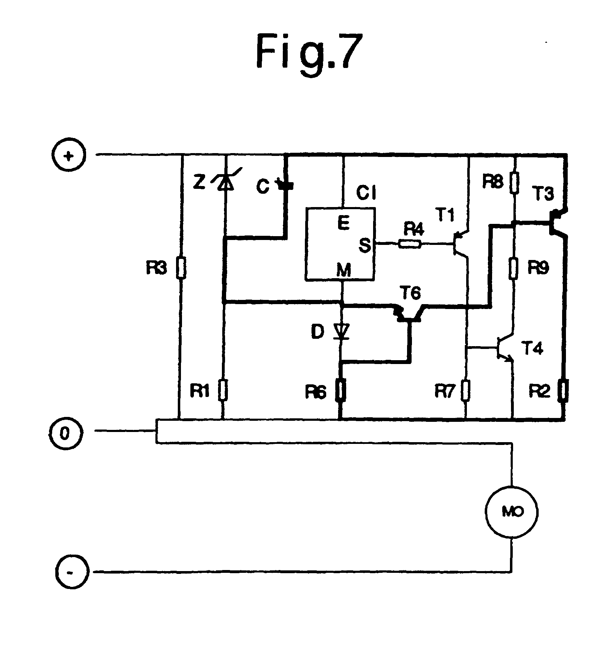

La fonction effaçage de la mémoire ou purge de la charge électrique est représentée à la figure 7.

Lors de l'interruption de la tension d'alimentation, la charge du condensateur C fournit un courant qui est bouclé par un circuit de puissance constitué des transistors T3 et T6. La résistance R3, qui a servi à l'amorçage de la détection de la disparition de la tension est court-circuitée et la conduction du transistor T6 est assurée beaucoup plus longtemps par R2 et R6.

Ce circuit se caractérise par une faible chute de tension, caractéristique indispensable pour une implantation en série, ainsi que par une bonne précision du déclenchement, d'une faible dérive en température, un temps de recouvrement très court et un faible courant de fuite après déclenchement.

Ce circuit se caractérise en outre par un coût particulièrement bas en comparaison de ses performances.

## Revendications

1. Sectionneur statique de circuit d'alimentation en courant continu d'une charge (MO) en cas de surintensité, constitué d'un dipôle (SS) destiné à être inséré dans le circuit de puissance de la charge, ce dipôle étant constitué de composants discrets et comprenant des moyens de détection d'une surintensité non passagère (R1, R2, T3, CI), des moyens de filtrage et de mémorisation de la tension d'alimentation (C, R1) destinés à supprimer l'effet d'une surintensité passagère lors de la mise sous tension de la charge et à conserver en mémoire la présence de la tension d'alimentation et des moyens de coupure de l'alimentation de la charge (T3, R2, R8, R9, T4, T1, R7, R4) commandés par les moyens de détection d'une surintensité, **caractérisé en ce que** les composants du dipôle constituent en outre des moyens de détection de la disparition de la tension d'alimentation (C, R1,R3, R6, T6) et des moyens d'effacement des moyens de mémorisation (R2, R6, T3, T6).

2. Sectionneur statique selon la revendication 1, **caractérisé en ce que** plusieurs composants du dipôle (C, R1, R2, R6, T3, T6) interviennent dans plus d'une fonction du dipôle.

3. Sectionneur statique selon la revendication 2, **caractérisé en ce que** les moyens de filtrage et de mémorisation de la tension d'alimentation sont constitués essentiellement d'un condensateur (C) et que les moyens d'effacement sont constitués d'un court-circuit commandé de ce condensateur (R2, R6, T3, T6).

4. Sectionneur statique selon la revendication 3, **caractérisé en ce que** le dipôle est disposé entre la borne positive de la source d'alimentation et le moteur et que le dipôle comprend, entre ses bornes, une première résistance (R3), un condensateur (C) en série avec une deuxième résistance (R1) et une diode Zener (Z) en parallèle avec le condensateur pour limiter la tension aux bornes du condensateur, un circuit intégré (CI), constituant un circuit à valeur de seuil, en série avec une diode (D) et une troisième résistance (R6), le point commun du circuit intégré et de la diode étant relié au point commun du condensateur et de la deuxième résistance, un premier transistor (T1) en série avec une quatrième résistance (R7) et dont la base est reliée à travers une cinquième résistance (R4) à la sortie (S) du circuit intégré, une sixième et une septième résistances (R8, R9) en série avec un deuxième transistor (T4) dont la base est reliée au point commun du premier transistor (T1) et de la quatrième résistance (R7) et un troisième transistor (T3) en série avec une huitième résistance (R2) et dont la base est reliée au collecteur du quatrième transistor (T6), l'émetteur de ce quatrième transistor étant relié au point commun du condensateur (C) et de la deuxième résistance (R1), sa base étant reliée au point commun de la diode (D) et de la troisième résistance (R6),
- les moyens de détection d'une surintensité étant constitués des deuxième (R1) et huitième (R2) résistances, du circuit intégré (CI) et du troisième transistor (T3),
- les moyens de filtrage et de mémorisation de la tension d'alimentation étant constitués du condensateur (C) et de la deuxième résistance (R1),
- les moyens de coupure de l'alimentation de la charge étant constitués des quatrième, cinquième, sixième, septième et huitième résistances (R7, R4, R8, R9, R2) et des premier, deuxième et troisième transistors (T1, T4, T3),
- les moyens de détection de la disparition de la tension d'alimentation étant constitués des première, deuxième et troisième résistances (R3, R1, R6), du condensateur (C) et du quatrième transistor (T6) et
- les moyens d'effacement des moyens de mémorisation étant constitués du condensateur (C), des troisième et quatrième transistors (T3, T6) et des troisième et huitième résistances (R6, R2).

## Claims

1. A static isolator for the DC supply circuit of a load (MO) in the event of a surge, consisting of a dipole (SS) intended to be inserted into the power circuit of the load, this dipole consisting of discrete components and comprising means for detecting a non-fleeting surge (R1, R2, T3, CI), means for filtering and storing the supply voltage (C, R1) which are intended to suppress the effect of a fleeting surge upon the energizing of the load and for retaining in memory the presence of the supply voltage and means for cutting off the supply to the load (T3, R2, R8, R9, T4, T1, R7, R4) which are controlled by the means for detecting a surge, **characterized in that** the components of the dipole furthermore constitute means for detecting the disappearance of the supply voltage (C, R1, R3, R6, T6) and means for erasing the storage means (R2, R6, T3, T6).

2. The static isolator as claimed in claim 1, **characterized in that** several components of the dipole (C, R1, R2, R6, T3, T6) intervene in more than one function of the dipole.

3. The static isolator as claimed in claim 2, **characterized in that** the means for filtering and storing the supply voltage consist essentially of a capacitor (C) and **in that** the means for erasing consist of a short-circuit controlled by this capacitor (R2, R6, T3, T6).

4. The static isolator as claimed in claim 3, **characterized in that** the dipole is arranged between the positive terminal of the supply source and the load and **in that** the dipole comprises, between its terminals, a first resistor (R3), a capacitor (C) in series with a second resistor (R1) and a Zener diode (Z) in parallel with the capacitor so as to limit the voltage at the terminals of the capacitor, an integrated circuit (CI), constituting a threshold value circuit, in series with a diode (D) and a third resistor (R6), the common point of the integrated circuit and of the diode being linked to the common point of the capacitor and of the second resistor, a first transistor (T1) in series with a fourth resistor (R7) and whose base is linked via a fifth resistor (R4) to the output (S) of the integrated circuit, a sixth and a seventh resistor (R8, R9) in series with a second transistor (T4) whose base is linked to the common point of the first transistor (T1) and of the fourth resistor (R7) and a third transistor (T3) in series with an eighth resistor (R2) and whose base is linked to the collector of the fourth transistor (T6), the emitter of this fourth transistor being linked to the common point of the capacitor (C) and of the second resistor (R1), its base being linked to the common point of the diode (D) and of the third resistor (R6),
- the means for detecting a surge being made up of the second (R1) and eighth (R2) resistors, of the integrated circuit (CI) and of the third transistor (T3),
- the means for filtering and storing the supply voltage being made up of the capacitor (C) and of the second resistor (R1),
- the means for cutting off the supply to the load being made up of the fourth, fifth, sixth, seventh and eighth resistors (R7, R4, R8, R9, R2) and of the first, second and third transistors (T1, T4, T3),
- the means for detecting the disappearance of the supply voltage being made up of the first, second and third resistors (R3, R1, R6), of the capacitor (C) and of the fourth transistor (T6) and
- the means for erasing the storage means being made up of the capacitor (C), of the third and fourth transistors (T3, T6) and of the third and eighth resistors (R6, R2).

## Patentansprüche

1. Statischer Trennschalter für eine Schaltung zur Versorgung einer Last (MO) mit Gleichstrom im Falle eines Überlaststroms, bestehend aus einem Zweipol (SS), der dazu bestimmt ist, in die Leistungsschaltung der Last eingefügt zu werden, wobei dieser Zweipol aus diskreten Bauteilen zusammengesetzt ist und Mittel (R1, R2, T3, CI) zur Ermittlung eines nicht vorübergehenden Überlaststroms; Mittel (C, R1) zum Filtern und Abspeichern der Speisespannung, die zur Beseitigung der Wirkungen eines vorübergehenden Überlaststroms beim Anlegen einer Spannung an die Last und zum Speichern des Anliegens der Speisespannung vorgesehen sind; sowie Mittel (T3, R2, R8, R9, T4, T1, R7, R4) zum Trennen der Versorgungsspannung von der Last aufweist, die von den Mitteln zur Ermittlung eines Überlaststroms gesteuert werden, **dadurch gekennzeichnet, dass** die Bauteile des Zweipols zusätzlich Mittel (C, R1, R3, R6, T6) zur Ermittlung des Ausbleibens der Speisespannung sowie Mittel (R2, R6, T3, T6) zum Löschen der Speichermittel bilden.

2. Statischer Trennschalter nach Anspruch 1, **dadurch gekennzeichnet, dass** mehrere Bauteile des Zweipols (C, R1, R2, R6, T3, T6) an mehr als einer Funktion des Zweipols beteiligt sind.

3. Statischer Trennschalter nach Anspruch 2, **dadurch gekennzeichnet, dass** die Mittel zum Filtern und Speichern der Speisespannung im wesentlichen von einem Kondensator (C) gebildet werden, und dass die Mittel zum Löschen des Speichers aus einem gesteuerten Kurzschluss (R2, R6, T3, T6) dieses Kondensators bestehen.

4. Statischer Trennschalter nach Anspruch 3, **dadurch gekennzeichnet, dass** der Zweipol zwischen dem positiven Anschluss der Speisespannung und dem Motor angeordnet ist, und dass der Zweipol zwischen seinen Anschlüssen einen ersten Widerstand (R3), einen in Reihe mit einem zweiten Widerstand (R1) geschalteten Kondensator (C) und eine Zenerdiode (Z) parallel zum Kondensator aufweist, um die Spannung an den Anschlüssen des Kondensators zu begrenzen; weiterhin eine integrierte Schaltung (CI), welche eine Schwellenwert-Schaltung bildet, in Reihe mit einer Diode (D) und einem dritten Widerstand (R6), wobei der Verbindungspunkt der integrierten Schaltung und der Diode am Verbindungspunkt des Kondensators mit dem zweiten Widerstand liegt; einen ersten Transistor (T1) in Reihe mit einem vierten Widerstand (R7), wobei die Basis des Transistors über einen fünften Widerstand (R4) mit dem Ausgang (S) der integrierten Schaltung verbunden ist; einen sechsten (R8) und einen siebten (R9) Widerstand in Reihe mit einem zweiten Transistor (T4), dessen Basis am Verbindungspunkt des ersten Transistors (T1) mit dem vierten Widerstand (R7) liegt; und einen dritten Transistor (T3) in Reihe mit einem achten Widerstand (R2), wobei die Basis des Transistors am Kollektor eines vierten Transistors (T6) liegt, sein Emitter am Verbindungspunkt des Kondensators (C) mit dem zweiten Widerstand (R1) angeschlossen ist und seine Basis mit dem Verbindungspunkt der Diode (D) mit dem dritten Widerstand (R6) verbunden ist, wobei
- die Mittel zur Ermittlung eines Überlaststroms aus dem zweiten (R1) und dem achten (R2) Widerstand, der integrierten Schaltung (CI) und dem dritten Transistor bestehen,
- die Mittel zum Filtern und Speichern der Speisespannung aus dem Kondensator (C) und dem zweiten Widerstand (R1) bestehen,
- die Mittel zum Trennen von der Speisung der Last aus dem vierten, fünften, sechsten, siebten und achten Widerstand (R7, R4, R8, R9, R2) und dem ersten, zweiten und dritten Transistor (T1, T4, T3) bestehen,
- die Mittel zur Bestimmung des Fehlens der Speisespannung aus dem ersten, zweiten und dritten Widerstand (R3, R1, R6), dem Kondensator (C) und dem vierten Transistor (T6) bestehen, und
- die Mittel zum Löschen des Speichers aus dem Kondensator (C), dem dritten und vierten Transistor (T3, T6) und dem dritten und achten Widerstand (R6, R2) bestehen.
